# EUROPEAN PATENT APPLICATION

(11) **EP 2 490 455 A1**
(43) Date of publication of application: **22.08.2012**
(21) Application number: 10831046.7
(22) Date of filing: 19.04.2010
(51) Int. Cl.: H04Q 3/00

(54) **METHOD, SYSTEM AND INTELLIGENT GATEWAY FOR MULTI-INTELLIGENT SERVICES**

(30) Priority: 17.11.2009 CN 200910224323
(71) Applicant: ZTE Corporation, Shenzhen, Guangdong 518057 (CN)
(72) Inventor: XIONG, Huiyue, Guangdong 518057 (CN); ZHOU, Xuqiang, Guangdong 518057 (CN)
(74) Representative: Klemm, Rolf
(86) International application number: PCT/CN2010/071875
(87) International publication number: WO 2011/060630

(57) **Abstract**

Disclosed in the present invention is a multi-intelligent service method, in which an intelligent gateway is introduced into an intelligent network system, the method includes: after having received a primary intelligent service request of a subscriber sent from a mobile switching center (MSC) or a service switching point (SSP), the intelligent gateway processing the request according to a service logic, if it is found by checking that the subscriber also subscribes to a secondary intelligent service, then triggering the secondary intelligent service to a corresponding service control point (SCP) successively, and after that, returning service control information to the MSC or SSP, thus achieving multi-intelligent service convergence. Also disclosed in the present invention is a corresponding system and an intelligent gateway. The present invention achieves a multi-intelligent service convergence, it is easier to control the triggering procedure and convenient to flexibly develop the intelligent service.

## Description

### Technical Field

The present invention relates to a method, system and intelligent gateway for achieving multi-intelligent service by introducing an intelligent gateway into an intelligent network system.

### Background of the Related Art

As to the conventional intelligent network system, when detecting an intelligent service request, the mobile switching center (MSC) or service switching point (SSP) directly communicates with the service control point (SCP) and complete the triggering of the intelligent service.

In the mobile intelligent network system, the mobile subscriber carries out a subscription on the home location register (HLR), i.e. the CAMEL subscription information (CSI) of a customized application of a mobile network enhanced service include calling CSI (O-CSI) and called CSI (T-CSI). In this case, CSI includes information such as service keys the GLOBAL TITLE (GT) address of the SCP, the service keys are used for identifying the intelligent service, and the GT address of the SCP is used for routing the signaling to the corresponding SCP. When the subscriber subscribes to the O-CSI and, as the calling subscriber, dials other called subscriber, a primary intelligent network service will be triggered; and when the subscriber, as the called subscriber, subscribes to the T-CSI, a called intelligent network service will be triggered. The triggering procedure is as follows: after having acquired the O-CSI or T-CSI, the MSC sends initiate DP message (IDP) to the SCP, the SCP returns service control information to the MSC: application counting (AC), request report BCSM event (RRBE) and connection (CONNECT) message, with the CONNECT message carrying the called subscriber number, and the MSC will route the same to the office where the called party is located according to this number. If the called subscriber is idle, then it is connected, and the calling and called parties make the call. After the call is completed, the MSC reports an application counting report (ACR) and reports BCSM event (ERB) and releases the call.

The triggering of the smart intelligent network service is done by the subscriber dialing a specific access code, such as 201, then the subscriber inputs the card number and password under the voice prompt respectively, and finally inputs the called number needing to be dialed to complete one intelligent network service call. Its procedure is as follows: the SSP carries out a number analysis on the access code dialed by the subscriber to judge whether or not to trigger a fixed network intelligent service. If yes, then IDP message is sent to the SCP, and the SCP issues service control information to the SSP: AC, RRBE and CONNECT message, with the CONNECT message carrying the called number needing to be connected. The SSP calls the called party according to this number, and the called party under idle state is connected successfully, after the called party answers, the calling and called parties make the call. After the call is completed, the SSP reports the ACR and ERB, then releases the call.

With the development of the intelligent service, the convergence demand on the fixed and mobile network multi-intelligent service becomes more and more popular. However, the MSC and the conventional SSP cannot provide convergence processing on the mobile multi-intelligent service and the fixed multi-intelligent service, and since most SCP devices in the current networks are quite old, they cannot meet the requirements of centralized counting and monitoring, which is disadvantageous to the flexible processing and development of the services.

### Summary of the Invention

The technical problem to be solved by the present invention is to provide a method for achieving multi-intelligent service convergence by way of an intelligent gateway.

In order to solve the above problem, the present invention provides a multi-intelligent service method, an intelligent gateway is introduced into an intelligent network system, and the method comprises:
after having received a primary intelligent service request of a subscriber sent from a mobile switching center (MSC) or a service switching point (SSP), the intelligent gateway processing the request according to a service logic, if it is found by checking that the subscriber also subscribes to a secondary intelligent service, then trigging the secondary intelligent service to a corresponding service control point (SCP) successively, and returning service control information to the MSC or SSP after the triggering is completed,
thus achieving the multi-intelligent service convergence.

Before receiving the primary intelligent service request, the method further comprises:
taking the intelligent gateway as the SCP corresponding to the primary intelligent service of the home subscriber thereof, configuring an SCP global title (GT) in the CSI of the primary intelligent service of the home subscriber of the intelligent gateway as a GT address of the intelligent gateway in a home location register (HLR); and
the MSC triggering the primary intelligent service to the intelligent gateway according to the CSI of the primary intelligent service acquired from the HLR.

Before receiving the primary intelligent service request, the method further comprises:
taking the intelligent gateway as the SCP corresponding to the primary intelligent service of its home subscriber, wherein the access code of the primary intelligent service of the home subscriber of the intelligent gateway is the access code corresponding to the intelligent gateway in a smart home location register (SHLR) or a subscriber data center (SDC); and
the SSP triggering the primary intelligent service to the intelligent gateway according to the access node of the primary intelligent service acquired by the SHLR or SDC.

The intelligent gateway is provided with the secondary intelligent service information about the home subscriber in a local database;
the checking step is as follows: the intelligent gateway judges whether or not the subscriber subscribes to a secondary intelligent service by querying the local database, if yes, then before the step of triggering the secondary intelligent service, the method further comprises: acquiring the CSI or access code corresponding to the secondary intelligent service, wherein the secondary intelligent service information queried by the intelligent gateway is secondary intelligent service information about a mobile network with respect to a mobile subscriber, and secondary intelligent service information about a fixed network with respect to a fixed network subscriber;
after having triggered the secondary intelligent service to the SCP, the intelligent gateway carrying a legality check on contents and parameters of application counting (AC), request report basic call state model (BCSM) event (RRBE), connect (CONNECT) message returned by the SCP, if they are legal, then monitoring a detection point (DP), converting the triggered intelligent service into a specific service prefix according to the service requirements, inserting the service prefix before the called number, then triggering the next secondary intelligent service until the processing for all the secondary intelligent services is completed, sending to the MSC or SSP the AC, RRBE and CONNECT message obtained after sorting the AC, RRBE and CONNECT message returned by various SCPs according to the service logic; and if they are illegal, then deciding to continue the call or terminate the call according to the rules defined on the intelligent gateway, if it is to decide to continue the call, then modifying the parameters in the AC, RRBE and CONNECT message according to the protocol, forwarding the same to the MSC or SSP, and if it is to decide to terminate the call, then issuing a release call (ReleaseCALL) message to the MSC or SSP.

The secondary intelligent service of the subscriber comprises a mobile intelligent service,
the method further comprises that: after the called party answers, the MSC reports a reply event to the intelligent gateway, the intelligent gateway forwards that message to the corresponding SCP, after the calling party or called party hangs up, the MSC reports a subscriber disconnection event report to the intelligent gateway, the intelligent gateway forwards that subscriber disconnection event report to the corresponding SCP, the corresponding SCP indicates the intelligent gateway to release the call, the intelligent gateway forwards the release message to the MSC, uniformly processes the counting information generated by various SCPs, and releases all the resources occupied by that call.

The secondary intelligent service of the subscriber comprises a fixed network intelligent service,
the method further comprises that: after the called party answers, the SSP reports a reply event to the intelligent gateway, the intelligent gateway forwards that message to the corresponding SCP, after the calling party or called party hangs up, the SSP reports a subscriber disconnection event report to the intelligent gateway, the intelligent gateway forwards that subscriber disconnection event report to the corresponding SCP, the corresponding SCP indicates the intelligent gateway to release the call, the intelligent gateway forwards a release message to the SSP, uniformly processes the counting information generated by various SCPs, and releases all the resources occupied by that call.

The present invention also provides a multi-intelligent service system, comprising a mobile switching center (MSC), a home location register (HLR), at least one service control point (SCP), and an intelligent gateway connected to the MSC, wherein
the intelligent gateway is configured to: after having received a primary intelligent service request of a subscriber sent from the MSC, process the request according to the service logic, if it is checked that the subscriber also subscribes to a mobile network secondary intelligent service, then successively trigger the secondary intelligent service toward the corresponding SCP, and after that, return service control information to the MSC, thus achieving multi-intelligent service convergence.

The HLR is configured to: the global title (GT) address of the SCP in the CSI of the primary intelligent service of the home subscriber thereof is the GT address of the intelligent gateway;
the MSC is configured to: trigger the primary intelligent service to the intelligent gateway according to the CSI of the primary intelligent service acquired from the HLR; and
the intelligent gateway is further configured to: as the corresponding SCP of the primary intelligent service of the home subscriber thereof, process the primary intelligent service , judge whether the subscriber subscribes to a secondary intelligent service by querying a local database in which the mobile secondary intelligent service information about the home subscriber is provided, if yes, then acquire the CSI corresponding to the secondary intelligent service of the subscriber.

The present invention also provides a multi-intelligent service system, comprising a service switching point (SSP), a smart home location register (SHLR), or a subscriber data center (SDC) and a service control point (SCP), and an intelligent gateway connected to the SSP, wherein
the intelligent gateway connected to the SSP is configured to: after having received a primary intelligent service request of a subscriber sent from the SSP, process the request according to the service logic, if it is checked that the subscriber also subscribes to a mobile network secondary intelligent service, then successively trigger the secondary intelligent service toward the corresponding SCP, and after that, return service control information to the SSP, thus achieving multi-intelligent service convergence.

The access code of the primary intelligent service information about the home subscriber of the intelligent gateway in the SHLR or SDC is the access code corresponding to the intelligent gateway;
the SSP is configured to: trigger the primary intelligent service to the intelligent gateway according to the access node of the primary intelligent service acquired from the SHLR or SDC; and
the intelligent gateway is further configured to: as the corresponding SCP of the primary intelligent service of the home subscriber thereof, process the primary intelligent service , judge whether the subscriber subscribes to a secondary intelligent service by querying a local database in which the fixed network secondary intelligent service information about the home subscriber is provided, if yes, then acquire the CSI corresponding to the secondary intelligent service.

The present invention also provides an intelligent gateway, configured to:
after having received a primary intelligent service request, which is triggered by the MSC to the intelligent gateway according to the CAMEL subscription information (CSI) of a customized application of a mobile network enhanced service of the primary intelligent service acquired from a home location register (HLR), of a subscriber sent from a mobile switching center (MSC);
carry out processing according to the service logic, if it is checked that the subscriber also subscribes to a mobile network secondary intelligent service, then successively trigger the secondary intelligent service to the corresponding service control point (SCP), and after that, return service control information to the MSC, thus achieving multi-intelligent service convergence.

The intelligent gateway is further configured to: as the corresponding SCP of the primary intelligent service of the home subscriber thereof, process the primary intelligent service, judge whether the subscriber subscribes to a secondary intelligent service by querying a local database in which the mobile secondary intelligent service information about the home subscriber is provided, if yes, then acquire the CSI corresponding to the secondary intelligent service of the subscriber.

The intelligent gateway is further connected to the SPP,
the intelligent gateway is further configured to: after having received a primary intelligent service request of a subscriber sent from a service switching point (SSP), process the request according to the service logic, if it is found by checking that the subscriber also subscribes to a secondary intelligent service, then trigger the secondary intelligent service to a corresponding SCP successively, and after that, return service control information to the SSP.

The intelligent gateway is further configured to: as the corresponding SCP of the primary intelligent service of the home subscriber thereof, process the primary intelligent service, judge whether the subscriber subscribes to a secondary intelligent service by querying the local database in which the fixed network secondary intelligent service information about the home subscriber is provided, if yes, then acquire the CSI corresponding to the secondary intelligent service.

The above solution achieves multi-intelligent service convergence, and some embodiments also have the following one or more technical effects: since an intelligent gateway is introduced into the intelligent network, and interfaces for the mobile network and fixed network are provided on the same device, the convergence of mobile network and fixed network intelligent services are achieved; and as to a multi-intelligent service, all the primary intelligent services are processed on the intelligent gateway, the intelligent gateway completes the triggering work of the secondary intelligent service, as to the mobile switching center, actually the intelligent service is only triggered once and the existing triggering procedure need not to be modified, and the interaction with different SCPs is unnecessary, which not only achieves a slight modification but also relieves the load of the mobile switching center; and all the intelligent counting information about the intelligent service is managed in a centralized way in the intelligent gateway, even if the service control point (SCP) in the existing network is too obsolete to achieve monitoring, the counting and monitoring functions can be uniformly completed at the intelligent gateway easily. Therefore, as to the situation of multi-intelligent service convergence, it is easier to control the triggering procedure and it is convenient to flexibly develop the intelligent service.

### Brief Description of Drawings

FIG. 1 is a schematic diagram of the composition of an intelligent network system according to the embodiments of the present invention;
FIG. 2 is a flowchart of signaling processing at the calling side according to the embodiments of the present invention; and
FIG. 3 is a flowchart of signaling processing at the called side according to the embodiments of the present invention.

### Preferred Embodiments of the Present Invention

Hereinafter, the present invention will be further described in detail by way of specific embodiments in conjunction with the accompanying drawings.

As compared to the prior art, an intelligent gateway is provided in the network in this embodiment, the intelligent gateway is a service control point corresponding to the primary intelligent service of the home subscriber thereof. In particular, as to a mobile network intelligent service, the GT address of the SCP in the CSI of the primary intelligent service of the home subscriber of this intelligent gateway in the HLR is configures as the GT address of this intelligent gateway; and as to a fixed network intelligent service, the access code of the primary intelligent service of the home subscriber of this intelligent gateway in the SHLR or SDC is the access code corresponding to this intelligent gateway, and the SSP can route the signaling to the intelligent gateway according to this access code. In addition, the secondary intelligent service information about the home subscriber is stored in the intelligent gateway, and these secondary intelligent services can be intelligent services of the mobile network or fixed network.

This embodiment is described with reference to the case that: the calling party is a mobile intelligent subscriber, the called party is a fixed network intelligent subscriber, and the calling party calls the called party by way of No. 7 signaling network.

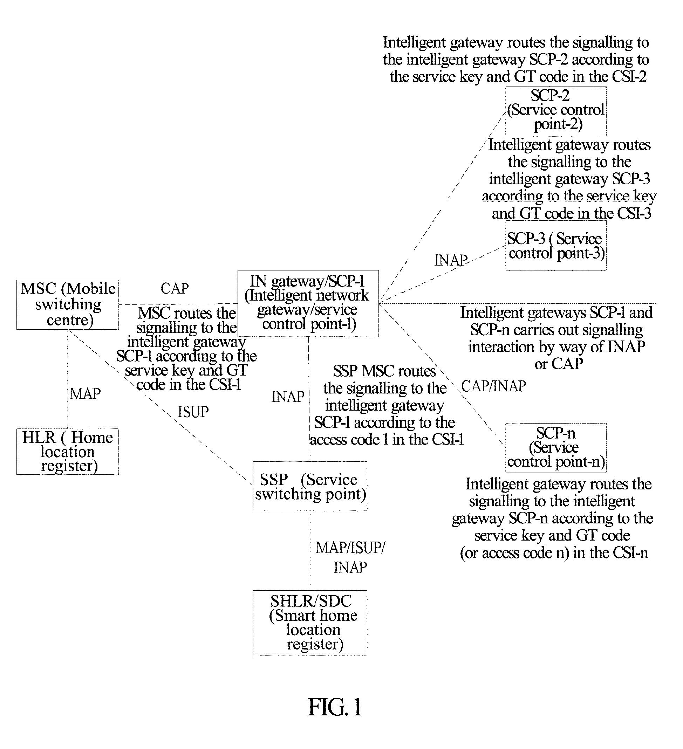

As shown in FIG. 1, the intelligent network includes an MSC, an SSP, an intelligent gateway SCP-1, an HLR, an SHLR or SDC, and service control points SCP-2 and SCP-3.

In this case, the MSC is used for querying the CSI at the HLR or locally querying the CSI synchronized to the MSC by the HLR, triggering the mobile primary intelligent service, and routing the signaling to the intelligent gateway according to the service keys in the CSI of the primary intelligent service and the GT code of the SCP.

The SSP is used for querying the intelligent information subscribed by the subscriber at the SHLR or SDC. The SSP is used for triggering the fixed network primary intelligent service, selecting the route by analyzing the number according to the access code, and routing the signaling to the intelligent gateway.

The intelligent gateway configures a corresponding service prefix for the called number according to the characteristics of the primary intelligent service, and at the same time queries the subscriber about whether there is CSI or access code of other secondary intelligent services, carries out CAP or Intelligent Network Application Part (INAP) signaling interaction with the corresponding SCP, successively triggers the secondary intelligent services according to the order of the secondary intelligent services, routes the signaling of the secondary intelligent services to the corresponding SCP, and after having received the application counting (AC), request report BCSM event, and connection (CONNECT) message sent by the SCP, adds the service prefix of this secondary intelligent service before the called number, and triggers the next secondary intelligent service until the processing of all the secondary intelligent services are completed, decides to modify the obtained application counting (AC), request report BCSM event, and connection (CONNECT) message according to the rule, and indicates the MSC or SSP to call and count. The functions of primary intelligent service processing, secondary intelligent service triggering, centralized monitoring and counting are completed.

The SCP is used for controlling the secondary intelligent service, authenticating the calling or called subscriber, and indicating the intelligent gateway to call and count.

The HLR is used for managing and maintaining the CSI of the mobile subscriber and synchronizing the CSI to the MSC.

The SHLR or SDC is used for managing and maintaining the intelligent information about the fixed network subscriber and providing subscriber information to the SSP.

When the above various devices interact with each other, the MSC interacts with the intelligent gateway by way of a Camel application part (CAP) signaling and interacts with the SSP by way of a No. 7 signaling. The SSP interacts with the intelligent gateway by way of an intelligent network application procedure (INAP) signaling. The SCP interacts with the intelligent gateway by way of an INAP or CAP signaling. The HLR interacts with the MSC by way of a Mobile Application Party (MAP) signaling. The SHLR interacts with the SSP by way of an MAP signaling. However, as to the situation that the MSC connects with SSP via an IP network connection or via the other office, the signaling used therebetween is not limited to the No. 7 signaling.

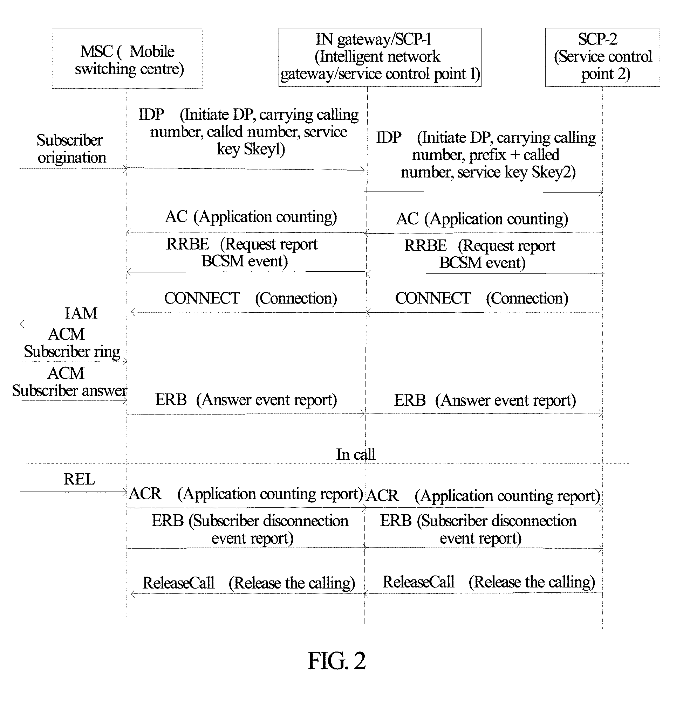

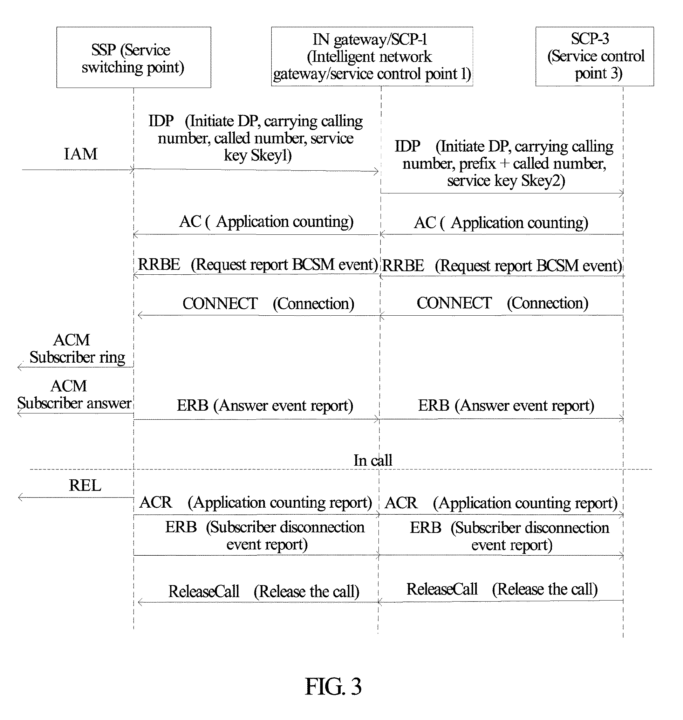

As shown in FIGS. 2 and 3, taking the following as an example: the SCP-n corresponding to the secondary intelligent service of the calling party is SCP-2 and the SCP-n corresponding to the secondary intelligent service of the calling party is SCP-3, the processing flow for triggering the multi-intelligent service is as follows:
Step 1: when the mobile subscriber initiates a call as the calling party, the MSC where the calling party is located invokes the local database or acquires the subscriber data O-CSI subscribed by this subscriber from the HLR, including the service key Skey1 of the primary intelligent service and the GT code of the intelligent gateway. The MSC triggers the primary intelligent network service to the intelligent gateway according to the service key Skey1 and the GT code.
Step 2: the MSC triggers the primary intelligent network service to use the CAP protocol to organize and send an IDP (initiate DP message) to the intelligent gateway, carrying the calling number, called number, and service key Skey1, the MSC uses the GT code of the intelligent gateway SCP-1 to route the No. 7 signaling to the intelligent gateway.
Step 3: in the intelligent gateway SCP-1, the local database is first queried to find whether the calling subscriber subscribes to other intelligent service information. If no, then the intelligent gateway SCP-1 is an ordinary SCP and carries out CAP signaling interaction with the MSC according to the service logic to indicate the MSC to carry out processing such as connecting and counting and so on. If the subscriber also has intelligent service information CSI-2, then the intelligent gateway SCP-1 inserts the Skey1 before the called number by converting it into a corresponding service prefix according to the service characteristics thereof, and then uses the CAP protocol to organize and send IDP message to the SCP-2. The service key in the IDP message is Skey2 and at the same time the message carries the calling number and the called number after the number has changed. The signaling is routed to SCP-2 using the GT code of the SCP-2 in CSI-2.
Step 5: SCP-2 carries out CAP signaling interaction with the intelligent gateway SCP-1. After having received the IDP message, the SCP-2 issues the application counting (AC), request report BCSM event (RRBE), and connection (CONNECT) message to the intelligent gateway SCP-1, with the CONNECT carrying the called number to be connected.
Step 6: after having received the AC, RRBE, and CONNECT message sent from SCP-2, the intelligent gateway SCP-1 carries out legality check on the contents and formats of the message. If illegal, then it is to decide to continue the call or terminate the call according to the rules defined on SCP-1. If legal, then it is to monitor the DP point of the call and at the same time modify the AC, RRBE, and CONNECT message according to the service logic;
   if illegal, then it is to decide to continue the call or terminate the call according to the rules defined on the intelligent gateway, if continue the call, then modify the parameters in the AC, RRBE, and CONNECT message according to the protocol, forward the message to the MSC or SSP, if terminate the call, then issue a ReleaseCALL message to the MSC.
Step 7: after having received the AC, RRBE, and CONNECT message sent from the intelligent gateway SCP-1, the MSC connects the called subscriber according to the number carried in the CONNECT and sends Initial Address Message (IAM) to the SSP.

After having received legal service control information returned by a secondary intelligent service, if it is found by checking that there are other secondary intelligent services, then the intelligent gateway triggers the next secondary intelligent service, and when there is no other secondary intelligent service, it returns the AC, RRBE, and CONNECT message sorted according to the service logic to the MSC. In this embodiment, since the calling party only has one mobile network secondary intelligent service, the called subscriber will be connected after the service control information sent from the intelligent gateway SCP-1 is received.

Step 8: The SSP receives an IAM message and applies for the subscriber data subscribed by this subscriber toward the SHLR or SDC, and the SHLR or SDC returns the primary intelligent service information registered by the subscriber. The SSP triggers the primary intelligent network service to the intelligent gateway SCP-1 according to the access code.

Step 9: the intelligent gateway SCP-1 first queries the local database about whether the called subscriber has other intelligent service. If no, then the intelligent gateway SCP-1 is an ordinary SCP and carries out INAP signaling interaction with the SSP according to the service procedure to indicate the SSP to carry out processing such as connecting and counting and so on. If the subscriber also has other intelligent service information, then the intelligent gateway SCP-1 inserts the intelligent service key Skey1 of the called subscriber before the called number by converting it into a corresponding service prefix according to the service characteristics thereof, and then uses the INAP protocol to organize and send IDP message to the SCP-3. The IDP message carries the service key, the calling number and the called number after the number has changed. The signaling is routed to the SCP-3 by carrying out a number analysis using the access code 3.

Step 10: SCP-3 carries out INAP signaling interaction with the intelligent gateway SCP-1. After having received the IDP message, the SCP-3 issues the application counting (AC), request report BCSM event (RRBE), and connection (CONNECT) message to the intelligent gateway SCP-1, with the CONNECT carrying the called number to be connected.

Step 11: after having received the AC, RRBE, and CONNECT message sent from SCP-3, the intelligent gateway SCP-1 needs to carry out legality check on the contents and formats of the message. If illegal, then it is to decide to continue the call or terminate the call according to the rules defined on SCP-1, if legal, then it is to monitor the DP point and at the same time decide whether to modify the AC, RRBE, and CONNECT message according to the protocol; if illegal and SCP-1 decides to terminate the call, then it is to send ReleaseCALL message to indicate the SSP to remove the call and release the resources occupied by this call; if illegal but the SCP-1 decides to continue the call, then it is to decide whether it is needed to modify the AC, RRBE, and CONNECT message according to the protocol and send the message to the SSP. If there is no other intelligent service, then it is to return the sorted AC, RRBE, and CONNECT message to the SSP.

Step 12: after having received the AC, RRBE, and CONNECT message sent from the intelligent gateway SCP-1, the SSP connects the called subscriber according to the number carried in the CONNECT.

Step 13: when the called party is idle and starts to ring, the SSP sends Address Complete Message (ACM) to the MSC.

Step 14: when the called party answers, the SSP sends answer message (ANM) to the MSC and at the same time sends event report BCSM (ERB) answer message to the intelligent gateway SCP-1. The MSC receives ANM message and sends ERB answer message to the intelligent gateway SCP-1. The two parties are connected.

Step 15: the intelligent gateway SCP-1 forwards the ERB answer message sent from the MSC to the SCP-2 and forwards the ERB answer message sent from the SSP to the SCP-3.

Step 16: the calling or called subscriber hangs up, the MSC reports the application counting report (ACR) and ERB disconnection message of the calling party to the intelligent gateway SCP-1, the intelligent gateway SCP-1 modifies the application counting report (ACR) and ERB disconnection message of the calling party and sends the message to the SCP-2, and the SCP-2 issues ReleaseCall message to indicate the intelligent gateway SCP-1 to release the call. The intelligent gateway SCP-1 forwards the ReleaseCall message to the MSC, processes the time for counting of SCP-1 and SCP-2 together, and releases all the resources applied for the calling side during the call.

Step 17: the SSP reports the application counting report (ACR) and ERB disconnection message of the called party to the intelligent gateway SCP-1. The intelligent gateway SCP-1 modifies the application counting report (ACR) and ERB disconnection message of the called party and sends the message to the SCP-3, and the SCP-3 issues ReleaseCall message to indicate the intelligent gateway SCP-1 to release the call. The intelligent gateway SCP-1 forwards the ReleaseCall message to the SSP, processes the time for counting of SCP-1 and SCP-3 together, and releases all the resources applied for the calling side during the call.

The above steps 16 and 17 are not limited to a certain order.

In this embodiment, the calling party is mobile subscriber subscription intelligent service and is triggered by MSC, and the called party is fixed network subscriber subscription intelligent service and is triggered by SSP. In other embodiments, the calling party can be a mobile or fixed network intelligent subscriber, the called party can also be a mobile or fixed network intelligent subscriber, and the triggering flow of the intelligent service can be processed similarly according to the protocol. As to an intra-office call, the difference only lies in that the called party is directly paged without out-office or in-office processing; and as to in-network and out-network calls, they are routed to the corresponding office points according to number analysis, and the flow thereof is similar to that in the above embodiments, in which the calling side first triggers the intelligent service and then sends IAM message out the office, and the called side receives the IAM message to trigger the intelligent service and then the called party is connected. If the intra-office signaling is not No. 7 signaling, then it is to carry out corresponding processing according to the protocol employed by the connection, such as Bearer Independent Call Control protocol (BICC), which will not be described here.

Those skilled in the art can make various corresponding changes and variations according to the present invention, but all these corresponding changes and variations shall all belong to the protection scope of the appended claims of the present invention.

### Industrial Applicability

In the technical solution of the present invention, since interfaces for the mobile network and fixed network are provided on the same device, the convergence of mobile network and fixed network intelligent services are achieved; and as to a multi-intelligent service, all the primary intelligent services are processed on the intelligent gateway, the intelligent gateway completes the triggering work of the secondary intelligent service, as to the mobile switching center, actually the intelligent service is only triggered once and the existing triggering procedure need not to be modified, and an interaction with different SCPs is unnecessary, which not only achieves slight modification but also relieves the load of the mobile switching center; and all the intelligent counting information about the intelligent service is managed in a centralized way in the intelligent gateway, even if the service control point (SCP) in the existing network cannot achieve monitoring due to oldness, the counting and monitoring functions can be uniformly completed at the intelligent gateway easily.

## Claims

1. A multi-intelligent service method, wherein an intelligent gateway is introduced into an intelligent network system, the method comprising:
after having received a primary intelligent service request of a subscriber sent from a mobile switching center (MSC) or a service switching point (SSP), the intelligent gateway processing the request according to a service logic, if it is found by checking that the subscriber also subscribes to a secondary intelligent service, then triggering the secondary intelligent service to a corresponding service control point (SCP) successively, and after that, returning service control information to the MSC or SSP,
thus achieving multi-intelligent service convergence.

2. The multi-intelligent service method as claimed in claim 1, wherein before receiving the primary intelligent service request, the method further comprises:
the intelligent gateway, which is taken as an SCP corresponding to the primary intelligent service of a home subscriber thereof, configuring an SCP global title (GT) in CAMEL subscription information (CSI) of a customized application of a mobile network enhanced service of the primary intelligent service of the home subscriber of the intelligent gateway as a GT address of the intelligent gateway in a home location register (HLR); and
the MSC triggering the primary intelligent service to the intelligent gateway according to the CSI of the primary intelligent service acquired from the HLR.

3. The multi-intelligent service method as claimed in claim 1 or 2, wherein before receiving the primary intelligent service request, the method further comprises:
taking the intelligent gateway as an SCP corresponding to the primary intelligent service of the home subscriber thereof, wherein an access code of the primary intelligent service of the home subscriber of the intelligent gateway is an access code corresponding to the intelligent gateway in a smart home location register (SHLR) or a subscriber data center (SDC); and
the SSP triggering the primary intelligent service to the intelligent gateway according to the access node of the primary intelligent service acquired from the SHLR or SDC.

4. The multi-intelligent service method as claimed in claim 2, wherein
the intelligent gateway is provided with the secondary intelligent service information about the home subscriber in a local database;
the checking step is as follows: the intelligent gateway judging whether or not the subscriber subscribes to the secondary intelligent service by querying the local database,
if yes, then before the step of triggering the secondary intelligent service, the method further comprises: acquiring CSI or an access node corresponding to the secondary intelligent service, wherein the secondary intelligent service information queried by the intelligent gateway is the secondary intelligent service information about a mobile network with respect to a mobile subscriber, and the secondary intelligent service information about a fixed network with respect to a fixed network subscriber.

5. The multi-intelligent service method as claimed in claim 1, further comprising:
after having triggered the secondary intelligent service to the corresponding SCP, the intelligent gateway carrying out a legality check on contents and parameters of application counting (AC), request report basic call state model (BCSM) event (RRBE), connect (CONNECT) message returned by the SCP, if legal, then monitoring a detection point (DP), converting the triggered intelligent service into a specific service prefix according to the service requirements, inserting the specific service prefix before a called number, then triggering a next secondary intelligent service until a processing for all the secondary intelligent services is completed, sending to the MSC or SSP the AC, RRBE and CONNECT message obtained after sorting the AC, RRBE and CONNECT message returned by various SCPs according to the service logic; and if illegal, then deciding to continue the call or terminate the call according to rules defined on the intelligent gateway, if it is decided to continue the call, then modifying the parameters in the AC, RRBE and CONNECT message according to protocols, forwarding the message to the MSC or SSP, and if it is decided to terminate the call, then issuing release call (ReleaseCALL) message to the MSC or SSP.

6. The multi-intelligent service method as claimed in claim 1, wherein
the secondary intelligent service of the subscriber comprises a mobile intelligent service, the method further comprises: after a called party answers, the MSC reporting a reply event to the intelligent gateway, the intelligent gateway forwarding that message to the corresponding SCP, after a calling party or the called party hangs up, the MSC reporting a subscriber disconnection event report to the intelligent gateway, the intelligent gateway forwarding that subscriber disconnection event report to the corresponding SCP, the corresponding SCP indicating the intelligent gateway to release the call, the intelligent gateway forwarding the release message to the MSC, uniformly processing the counting information generated by various SCPs, and releasing all resources occupied by that call.

7. The multi-intelligent service method as claimed in claim 1 or 6, wherein
the secondary intelligent service of the subscriber comprises a fixed network intelligent service,
the method further comprises: after the called party answers, the SSP reporting a reply event to the intelligent gateway, the intelligent gateway forwarding that message to the corresponding SCP, after the calling party or called party hangs up, the SSP reporting a subscriber disconnection event report to the intelligent gateway, the intelligent gateway forwarding that subscriber disconnection event report to the corresponding SCP, the corresponding SCP indicating the intelligent gateway to release the call, the intelligent gateway forwarding the release message to the SSP, uniformly processing the counting information generated by various SCPs, and releasing all resources occupied by that call.

8. A multi-intelligent service system, comprising a mobile switching center (MSC), a home location register (HLR), at least one service control point (SCP), and an intelligent gateway connected to the MSC, wherein
the intelligent gateway is configured to: after having received a primary intelligent service request of a subscriber sent from the MSC, process the request according to a service logic, if it is found by checking that the subscriber also subscribes to a mobile network secondary intelligent service, then successively trigger the secondary intelligent service to a corresponding SCP, and after that, return service control information to the MSC, thus achieving multi-intelligent service convergence.

9. The multi-intelligent service system as claimed in claim 8, wherein
the HLR is configured as that: a global title (GT) of the SCP in CAMEL subscription information (CSI) of a customized application of a mobile network enhanced service of a primary intelligent service of the home subscriber thereof is a GT address of the intelligent gateway;
the MSC is configured to: trigger the primary intelligent service to the intelligent gateway according to the CSI of the primary intelligent service acquired from the HLR;
the intelligent gateway is further configured to: as an SCP corresponding to the primary intelligent service of the home subscriber thereof, process the primary intelligent service, judge whether or not the subscriber subscribes to a secondary intelligent service by querying a local database in which mobile secondary intelligent service information about the home subscriber is provided, if yes, then acquire the CSI corresponding to the secondary intelligent service of the subscriber.

10. A multi-intelligent service system, comprising a service switching point (SSP), a smart home location register (SHLR) or a subscriber data center (SDC), a service control point (SCP), and an intelligent gateway connected to the SSP, wherein
the intelligent gateway is connected to the SSP and is configured to: after having received a primary intelligent service request of a subscriber sent from the SSP, process the request according to a service logic, if it is found by checking that the subscriber also subscribes to a fixed network secondary intelligent service, then successively trigger the secondary intelligent service to a corresponding SCP, and after that, return service control information to the SSP, thus achieving multi-intelligent service convergence.

11. The multi-intelligent service system as claimed in claim 10, wherein
an access code of the primary intelligent service information about the home subscriber of the intelligent gateway in the SHLR or SDC is an access code corresponding to the intelligent gateway;
the SSP is configured to: trigger the primary intelligent service to the intelligent gateway according to the access node of the primary intelligent service acquired from the SHLR or SDC;
the intelligent gateway is further configured to: as an SCP corresponding to the primary intelligent service of the home subscriber thereof, process the primary intelligent service, judge whether or not the subscriber subscribes to a secondary intelligent service by querying a local database in which a fixed network secondary intelligent service information about the home subscriber is provided, if yes, then acquire CAMEL subscription information (CSI) of a customized application of a mobile network enhanced service corresponding to the secondary intelligent service.

12. An intelligent gateway, which is configured to:
after having received a primary intelligent service request, which is triggered by a mobile switching center (MSC) to the intelligent gateway according to CAMEL subscription information (CSI) of a customized application of a mobile network enhanced service of the primary intelligent service acquired by a home location register (HLR), of a subscriber sent from the MSC,
carry out processing according to a service logic, if it is found by checking that the subscriber also subscribes to a mobile network secondary intelligent service, then successively trigger the secondary intelligent service to a corresponding service control point (SCP), and after that, return service control information to the MSC, thus achieving multi-intelligent service convergence.

13. The intelligent gateway as claimed in claim 12, further configured to: as an SCP corresponding to the primary intelligent service of the home subscriber thereof, process the primary intelligent service, judge whether or not the subscriber subscribes to a secondary intelligent service by querying a local database in which mobile secondary intelligent service information about the home subscriber is provided, if yes, then acquire the CSI corresponding to the secondary intelligent service of the subscriber.

14. The intelligent gateway as claimed in claim 12, connected to the SSP, and further configured to: after having received a primary intelligent service request of a subscriber sent from a service switching point (SSP), process the request according to a service logic, if it is found by checking that the subscriber also subscribes to a fixed network secondary intelligent service, then trigger the secondary intelligent service to a corresponding SCP successively, and after that, return service control information to the SSP.

15. The intelligent gateway as claimed in claim 14, further configured to: as an SCP corresponding to the primary intelligent service of the home subscriber thereof, process the primary intelligent service, judge whether or not the subscriber subscribes to a secondary intelligent service by querying a local database in which the fixed network secondary intelligent service information about the home subscriber is provided, if yes, then acquire the CSI corresponding to the secondary intelligent service.
